# EUROPÄISCHE PATENTSCHRIFT

(11) **EP 3 107 637 B1**
(45) Veröffentlichungstag und Bekanntmachung des Hinweises auf die Patenterteilung: **05.02.2020**
(21) Anmeldenummer: 15741799.9
(22) Anmeldetag: 24.03.2015
(51) Int. Cl.: B01D 53/14

(54) **VERFAHREN UND VORRICHTUNG ZUR ABSCHEIDUNG VON KOHLENDIOXID AUS EINEM GASSTROM UND ZUM ENTFERNEN VON DEGRADATIONSPRODUKTEN IM WASCHMEDIUM MITTELS PHOTOLYTISCHER ZERSETZUNG**
METHOD AND DEVICE FOR SEPARATING CARBON DIOXIDE FROM A GAS STREAM AND FOR REMOVING DEGRADATION PRODUCTS IN THE WASHING MEDIUM BY PHOTOLYTIC DECOMPOSITION
PROCÉDÉ ET DISPOSITIF DE SÉPARATION DU DIOXYDE DE CARBONE D'UN FLUX DE GAZ ET D'ÉLIMINATION DE PRODUITS DE DÉGRADATION DANS L'AGENT DE LAVAGE PAR DÉCOMPOSITION PAR PHOTOLYSE

(30) Priorität: 07.04.2014 DE 102014206633
(43) Veröffentlichungstag der Anmeldung: 28.12.2016
(73) Patentinhaber: Siemens Aktiengesellschaft, 80333 München (DE)
(72) Erfinder: HÄFNER, Benjamin, 63505 Langenselbold (DE); KURSAWE, Ansgar, 65527 Niedernhausen (DE); REICHL, Albert, 65812 Bad Soden (DE); SCHLIEPDIEK, Torsten, 65929 Frankfurt am Main (DE); SCHNEIDER, Rüdiger, 65817 Eppstein (DE); SCHRAMM, Henning, 65719 Hofheim am Taunus (DE)
(86) Internationale Anmeldenummer: PCT/EP2015/056270
(87) Internationale Veröffentlichungsnummer: WO 2015/154989

(56) Entgegenhaltungen:
- EP-A1- 2 559 473
- WO-A1-2013/023918
- WO-A2-2013/043802

## Beschreibung

Die Erfindung betrifft ein Verfahren zur Abscheidung von Kohlendioxid aus einem Gasstrom, insbesondere aus einem Rauchgasstrom. Des Weiteren betrifft die Erfindung eine Abscheidevorrichtung für Kohlendioxid aus einem Gasstrom.

Vor dem Hintergrund der klimatischen Veränderungen ist es ein globales Ziel, die Emission von Schadstoffen in die Atmosphäre zu verringern. Dies gilt insbesondere für die Emission von Kohlendioxid (CO₂), welches sich in der Atmosphäre ansammelt, die Wärmeabstrahlung der Erde behindert und so als Treibhauseffekt zu einer Erhöhung der Erdoberflächentemperatur führt.

Besonders bei fossilbefeuerten Kraftwerksanlagen zur Erzeugung elektrischer Energie entsteht durch die Verbrennung eines fossilen Brennstoffes ein kohlendioxidhaltiges Rauchgas. Zur Vermeidung bzw. zur Verringerung von Kohlendioxid- Emissionen in die Atmosphäre muss das Kohlendioxid aus dem Rauchgas abgetrennt werden. Entsprechend werden insbesondere bei bestehenden fossilbefeuerten Kraftwerken geeignete Maßnahmen diskutiert, um nach der Verbrennung das entstandene Kohlendioxid aus dem Abgas abzutrennen (Post-Combustion-Capture).

Als eine technische Realisierung wird hierzu im Rauchgas enthaltenes Kohlendioxid nach der Verbrennung durch einen Absorptions-Desorptions-Prozess mittels eines Waschmediums bzw. eines Absorptionsmediums aus dem jeweiligen Gasstrom herausgewaschen. Hierzu werden häufig aminhaltige Waschmedien eingesetzt, die eine gute Selektivität und eine hohe Kapazität für Kohlendioxid zeigen.

Allerdings neigen diese aminbasierten Waschmedien zum Aufbau von Nitrosaminen. Durch Rauchgasnebenbestandteile wie Stickoxide (NOₓ), sowie durch das Auftreten kleiner Mengen flüchtiger Amine, die durch thermische Zersetzung, oxidativen oder katalytischen Zerfall des Waschmediums gebildet werden, können geringe Mengen flüchtiger toxischer Nitrosamine gebildet werden.

Die Nitrosamine bzw. die Amine reichern sich solange im Waschmedium an, bis sich ein stabiles Gleichgewicht zwischen der Bildungsrate der Zerfallsprodukte bzw. der Zerfallsfolgeprodukte (insgesamt Degradationsprodukte) und deren Ausschleusung aus dem Prozess einstellt. Entsprechend konzentrieren sich die Degradationsprodukte mit der Zeit im Abscheideprozess auf. Aufgrund der hohen in den Abscheideprozess eingetragenen Rauchgasmengen und der damit verbundenen Aufkonzentrierung der Degradationsprodukte kann es hierbei zu einer Emission dieser Komponenten über den Absorber in die Atmosphäre oder zu einer Kontamination des abgeschiedenen Kohlendioxids kommen.

Um diese unerwünschten Emissionen zu verhindern, kann beispielsweise eine Reinigungsvorrichtung für das aus dem Absorber ausgetragene Rauchgas eingesetzt werden. Hierzu können auf den Absorber ein- oder mehrstufige wässrige Wäscher aufgesetzt werden, die sowohl flüchtige Amine als auch entstehende Nitrosamine aus dem von Kohlendioxid gereinigten Rauchgasstrom auswaschen. Diese Methode ist jedoch für die großen Mengen des zu reinigenden Rauchgases, welches sich im Betrieb einer Abscheidevorrichtung auf mehrere Millionen Kubikmeter Rauchgas pro Betriebsstunde beläuft, sowohl hinsichtlich der Investitions- und Betriebskosten, als auch hinsichtlich des baulichen Aufwands aufwändig und teuer.

Alternativ ist es möglich, dem Desorber eine Reinigungsvorrichtung nachzuschalten. Hierzu ist aus der WO 2013/023918 A1 ein Verfahren bekannt, bei welchem leicht flüchtige Degradationsprodukte aus einem Absorptionsmittelkreislauf eines CO₂-Abscheideprozesses abgetrennt werden. Der CO₂- Abscheideprozess umfasst dabei den Absorptionsmittelkreislauf mit einem Absorber und einem Desorber, wobei einem dem Desorber nachgeschalteten Kondensator Kondensat entnommen und dieses von Degradationsprodukten weitgehend gereinigt wird. Hierzu wird das Kondensat einer Reinigungsvorrichtung zugeführt, in welcher die Reinigung des Kondensats von den enthaltenen Degradationsprodukten destillativ oder mittels eines Aktivkohlewäschers erfolgt. Das so gebildete, gereinigte Kondensat wird wieder dem Absorptionsmittelkreislauf zurückgeführt. Das vorbeschriebene Verfahren ist jedoch unter bestimmten Randbedingungen nicht wirtschaftlich durchführbar.

Weiterhin ist aus der EP 2 559 473 A1 ein Verfahren zum Aufreinigen eines mit Nitrosaminen verunreinigten Produktes einer Prozessanlage bekannt. Das verunreinigte Produkt wird mit UV-Strahlung behandelt, wobei die Nitrosamine zerstört werden. Das aufzureinigende Produkt ist hierbei das mit Nitrosaminen verunreinigte CO₂-haltige Lösungsmittel bzw. Waschmedium. Gemäß der EP 2 559 473 A1 können zur Bestrahlung eine oder mehrere UV-Strahlungsquellen eingesetzt werden, die jeweils in einem Waschmediumkreislauf einer Leitung für ein mit Kohlendioxid beladenes Waschmedium angeschlossen sind, so dass die im Waschmedium enthaltenen Nitrosamine mittels UV-Strahlung zerstört werden. Die dabei entstehenden Zersetzungsprodukte lassen sich beispielsweise mittels einer Adsorptionseinrichtung entfernen.

Der Erfindung liegt als eine erste Aufgabe zugrunde, ein Verfahren anzugeben, welches eine kontrollierte und kostengünstig umsetzbare Entfernung von Degradationsprodukten aus einem im Rahmen einer Abscheidung von Kohlendioxid aus einem Gasstrom eingesetzten Waschmediums ermöglicht, um so eine unerwünschte Emission der Degradationsprodukte in die Atmosphäre zu verhindern oder zumindest wesentlich zu verringern.

Als eine zweite Aufgabe liegt der Erfindung zugrunde, eine Abscheidevorrichtung für Kohlendioxid aus einem Gasstrom anzugeben, mit welcher ein entsprechendes Verfahren durchführbar ist.

Die erste Aufgabe der Erfindung wird erfindungsgemäß gelöst durch ein Verfahren zur Abscheidung von Kohlendioxid aus einem Gasstrom, insbesondere aus einem Rauchgasstrom, wobei ein Gasstrom in einem Absorber einer Abscheidevorrichtung unter Abscheidung von im Gasstrom enthaltenem Kohlendioxid mit einem Waschmedium in Kontakt gebracht wird, wobei als Waschmedium eine Aminosäuresalzlösung eingesetzt wird, wobei das beladene Waschmedium zum Freisetzen des Kohlendioxids einem Desorber der Abscheidevorrichtung zugeführt wird, wobei dem Desorber ein Dampfstrom entnommen und zur Bildung eines Kondensats einer Kühleinheit zugeführt wird, wobei in wenigstens einem Teilstrom des Kondensats enthaltene Degradationsprodukte, insbesondere Nitrosamine, photolytisch in Zersetzungsprodukte zersetzt werden, wobei zumindest die Zersetzungsprodukte, insbesondere Nitrite und Amine, abgezogen werden, und wobei wenigstens ein Teilstrom des Kondensats in den Desorber zurückgeführt wird, wobei wenigstens ein Teilstrom (38) des Kondensats in den Desorber (5) zurückgeführt wird. Erfindungsgemäß wird ein erster Teilstrom (103) des aus dem Absorber (3) ausströmenden Waschmediums einer ersten Desorberstufe (109) des Desorbers (5) ohne Vorwärmung zugeführt und ein zweiter Teilstrom (105) des aus dem Absorber (3) ausströmenden Waschmediums einer zweiten Desorberstufe (113) des Desorbers (5) vorgewärmt zugeführt, wobei der erste Teilstrom (103) temporär gedrosselt oder vollständig abgeschaltet wird.

In einem ersten Schritt geht die Erfindung von der Tatsache aus, dass die Emission von bei der CO₂-Abscheidung entstehenden Degradationsprodukten aufgrund ihrer umweltschädlichen Wirkung rechtlich limitiert ist. Die vorgegebenen Emissionsrichtwerte können jedoch bislang nur mit großem baulichem Aufwand und/oder entsprechend hohen Betriebskosten der einzusetzenden Anlagenkomponenten gewährleistet werden.

In einem zweiten Schritt berücksichtigt die Erfindung, dass Nitrosamine photolytisch zersetzt werden können. Als eine Möglichkeit sind hierzu UV-Strahlungsquellen bekannt, die gängigerweise zur Reinstwasser- und Trinkwasseraufbereitung eingesetzt werden und kommerziell verfügbar sind. Eine Verwendung zur Nitrosaminzersetzung im Rahmen eines Abscheideprozesses wäre somit wünschenswert. Allerdings ist ein solcher Einsatz nicht zielführend, da das zur Abscheidung von Kohlendioxid eingesetzte Waschmedium selbst die UV-Strahlung absorbiert und somit ein Großteil der durch die Strahlung eingebrachten Energie in Wärme umgewandelt wird, anstatt zur gezielten Nitrosaminzerstörung genutzt werden zu können.

Unter Berücksichtigung des Vorbeschriebenen erkennt die Erfindung in einem dritten Schritt, dass es dann möglich ist, im Waschmedium enthaltene Degradationsprodukte und insbesondere enthaltene Nitrosamine zielgerichtet photolytisch zu zersetzen, wenn die Bestrahlung ohne eine Beeinträchtigung des Waschmediums erfolgt. Dies kann dann gewährleistet werden, wenn anstatt des Waschmediums ein während der Abscheidung anfallendes Kondensat behandelt wird, das im Wesentlichen frei von zur CO₂-Abscheidung eingesetztem Waschmedium ist.

Mit anderen Worten erfolgt die Zersetzung der Degradationsprodukte photolytisch in einem Kondensat, anstatt im Kreislauf des im Abscheideprozess zirkulierenden Waschmediums. Auf diese Weise kann verhindert werden, dass das eingesetzte Waschmedium selbst die UV-Strahlung absorbiert; diese dient lediglich der gezielten Zersetzung unerwünschter und schädlicher Degradationsprodukte innerhalb des Kondensats. Die bei der photolytischen Zersetzung entstehenden Zersetzungsprodukte, insbesondere Nitrite und Amine, werden dann abgezogen, so dass eine Rückbildung zu Nitrosaminen ausgeschlossen werden kann.

Insbesondere kann durch ein Abziehen der Zersetzungsprodukte aus dem Abscheideprozess die unerwünschte Aufkonzentrierung der Nitrosamine bzw. deren Rückbildung gezielt verhindert werden. Hierbei besteht beispielsweise die Möglichkeit, einen von Zersetzungsprodukten gereinigten Teilstrom des Kondensats nach dessen Reinigung in den Desorber zurückzuführen und so die Gesamtkonzentration der Nitrosamine innerhalb des Desorbers zu verringern. Alternativ oder zusätzlich besteht die Möglichkeit, die in dem Teilstrom gebildeten Zersetzungsprodukte gemeinsam mit dem Kondensat aus dem Prozess zu entfernen und beispielsweise durch eine externe Frischwasserzufuhr die Nitrosaminkonzentration im Abscheideprozess bzw. insbesondere im Desorber abzusenken.

Insgesamt ermöglicht das Verfahren den Verzicht auf eine teure und aufwändige Modifikation des Absorbers. Da auf zusätzliche Absorberwäscher verzichtet werden kann, fallen auch keine zusätzlichen Waschwassermengen an, die aufwändig nachbehandelt werden müssten. Stattdessen bietet das Verfahren die Möglichkeit, den Desorber durch geringe bauliche Eingriffe so zu modifizieren, dass eine effektive Zersetzung unerwünschter Degradationsprodukte und eine sich dieser anschließenden Abtrennung der Zersetzungsprodukte aus dem Waschmedium erfolgen können.

Es besteht hierbei die Möglichkeit, bereits bestehende Desorber entsprechend nachzurüsten, wenn beispielsweise die Einhaltung von Grenzwerten durch lokale Umstände oder regionalspezifische hohe regulatorische Anforderungen als kritisch einzustufen ist. Ein Absorber ließe sich baulich nicht bzw. nur mit hohen Kosten für eine nachzurüstende Waschoption vorbereiten.

Die Entnahme des Dampfstroms unter Bildung eines Kondensats erfolgt zweckmäßigerweise am Kopf des Desorbers. Hier wird ein Dampfstrom entnommen und über eine Dampfleitung der Kühleinheit zugeführt. Der Dampfstrom enthält im Wesentlichen Kohlendioxid, sowie Wasser und die zu entfernenden flüchtigen Degradationsprodukte. In der Kühleinheit wird der Dampfstrom abgekühlt und das Kohlendioxid abgetrennt. Wenigstens ein Teilstrom des aus der Kühleinheit austretenden Kondensats wird schließlich derart aufbereitet, dass die im Kondensat enthaltenen Degradationsprodukte, insbesondere die enthaltenen Nitrosamine, photolytisch zersetzt werden. Die bei der photolytischen Zersetzung entstehenden Zersetzungsprodukte des Teilstroms werden dann abgezogen.

Als Waschmedium wird eine Aminosäuresalzlösung eingesetzt. Eine wässrige Aminosäuresalzlösung ist hierbei zweckmäßig. Aminosäuresalze eigenen sich insbesondere aufgrund ihres kaum merklichen Dampfdrucks, der einen Austrag in die Atmosphäre verhindert. Ein bevorzugtes Aminosäuresalz ist ein Salz eines Metalls, insbesondere eines Alkalimetalls. Auch können Mischungen verschiedener Aminosäuresalze als Aktivkomponente des Waschmediums eingesetzt werden.

Bei der Erfindung wird dem Absorber entnommenes Waschmedium in zumindest zwei Teilströme aufgeteilt. Dieses Verfahren ist als Split-Feed-Verfahren bekannt.

Ein erster Teilstrom des aus dem Absorber ausströmenden Waschmediums wird einer ersten Desorberstufe des Desorbers zugeführt. Der erste Teilstrom ist hierbei ein Teilstrom des Gesamtstroms des aus dem Absorber austretenden Waschmediums und wird der ersten Desorberstufe des Desorbers ohne Vorwärmung zugeführt. Dieser kalte Teilstrom wird durch im Desorber aufsteigenden Wasserdampf erwärmt und so bei der Kondensation des Wasserdampfes entstehende Energie zurückgewonnen. Entsprechend kann der Kühlwasserbedarf der Kühleinheit gesenkt werden und Investitionskosten, beispielsweise hinsichtlich der Kühlflächen eingespart werden.

Ein zweiter Teilstrom des aus dem Absorber ausströmenden Waschmediums wird vorzugsweise einer zweiten Desorberstufe des Desorbers zugeführt. Der zweite Teilstrom des Gesamtstroms wird hierzu vorgewärmt. Die dem Desorber durch den vorgewärmten zweiten Teilstrom zugeführte Wärme ermöglicht eine Verringerung der zur Desorption extern in den Prozess eingebrachten thermischen Energie. Sowohl die erste als auch die zweite Desorberstufe werden zweckmäßigerweise bei vorgegebenen Temperaturen und Drücken betrieben.

Um die Entfernung der Degradationsprodukte aus dem Kondensat weiter zu verbessern, besteht die Möglichkeit eines regeltechnischen Eingriffs in das Split-Feed-Verfahren. Ein solcher Eingriff kann wahlweise durch die temporäre Drosselung oder die temporäre vollständige Abschaltung des kalten ersten Teilstroms erfolgen. Dies ist insbesondere bei grenzwertig hohen Nitrosaminkonzentrationen von Vorteil, da so eine Temperaturerhöhung am Desorberkopf auf bis zu 100°C erreicht werden kann. Entsprechend steigt auch die Konzentration der Nitrosamine für den Zeitraum der Drosselung und/oder der Abschaltung des ersten Teilstroms am Desorberkopf vorübergehend massiv an, so dass die Nitrosamine verstärkt ins Kondensat des Desorbers ausgewaschen werden.

Sobald die Konzentration der Nitrosamine wieder im regulatorisch unbedenklichen Bereich liegt, kann der kalte erste Teilstrom wieder zugeschaltet werden, um den Prozess mit bestmöglichem Wirkungsgrad zu fahren. Um dieser temporäre Betriebsweise zu ermöglichen, wird am Desorberkopf vorzugsweise eine entsprechend dimensioniert Kühleinheit eingesetzt.

Das innerhalb des Desorbers von Kohlendioxid gereinigte, regenerierte Waschmedium wird vorzugsweise zum Absorber zurückgeführt. Hierbei passiert das regenerierte Waschmedium vorzugsweise einen Wärmtauscher, in dem die Wärme des von dem Desorber zum Absorber strömenden, regenerierten Waschmediums auf das aus dem Absorber strömende, beladene Waschmedium übertragen wird und das beladene Waschmedium entsprechend vorgewärmt wird.

Zumindest ein Teilstrom des Kondensats wird abgezogen, wobei die im abgezogenen Teilstrom enthaltenen Degradationsprodukte photolytisch in Zersetzungsprodukte zersetzt werden. Der Teilstrom wird zweckmäßigerweise über eine Kondensatabführleitung abgezogen, die als Abzweigleitung einem Kondensatkreislauf angeschlossen ist.

In einer vorteilhaften Ausgestaltung der Erfindung werden die Degradationsprodukte durch UV-Strahlung photolytisch zersetzt. Durch UV-Strahlung werden die Nitrosamine in Nitrite und Amine zersetzt.

Die im Teilstrom enthaltenen Nitrosamine werden photolytisch, vorzugsweise mittels einer UV-Strahlungsquelle, unter Bildung von Nitriten und Aminen zersetzt.

Die bei der Zersetzung der Nitrosamine entstehenden Zersetzungsprodukte werden anschließend entfernt, wozu sie bevorzugt gemeinsam mit dem Kondensat abgezogen werden. Mit anderen Worten wird der gesamte über die Kondensatabführleitung abgezogene Teilstrom entfernt und nicht in den Desorber zurückgeführt. Insbesondere in Kombination mit einer externen Wasserzufuhr zum Desorber kann so die Menge an im Abscheideprozess enthaltenen Nitriten und Aminen bzw. den Nitrosaminen verringert und entsprechend eine unerwünschte Aufkonzentrierung im Prozess verhindert werden.

Der abgezogene und behandelte Teilstrom kann dann bevorzugt einer Verwertungseinrichtung zugeführt werden. Hierbei ist insbesondere die Zufuhr zu einer Kläranlage vorteilhaft, wo die Nitrite und Amine von Bakterien abgebaut werden. Die Zufuhr kann hier beispielsweise derart erfolgen, dass das abgezogene Kondensat und die enthaltenen Zersetzungsprodukte in einem Vorratstank gesammelt werden und anschließend zu einer entsprechenden Verwertungseinrichtung transportiert werden. Alternativ ist- bei räumlicher Nähe - auch eine unmittelbare Nutzung des abgezogenen und behandelten Teilstroms möglich.

Um den Wasserhaushalt im Rahmen des Abscheideprozesses konstant zu halten, wird der abgezogene Teilstrom aus einem Kondensatkreislauf zweckmäßigerweise durch Frischwasser ersetzt. Das Frischwasser kann über eine entsprechende Frischwasserleitung zugeführt werden, die insbesondere dem Kondensatkreislauf angeschlossen ist. Je nach Menge des abgezogenen Teilstroms kann dem Prozess eine äquivalente Menge an Frischwasser zugeführt werden.

Vorzugsweise werden die Zersetzungsprodukte in einer Aufbereitungseinheit aus dem Kondensat abgetrennt. Hierzu werden die in einem Teilstrom oder alternativ in dem Gesamtstrom des Kondensats enthaltenen Degradationsprodukte in einem ersten Schritt photolytisch zersetzt. Der Teilstrom oder der Gesamtstrom des Kondensats mit den darin enthaltenen Zersetzungsprodukten wird anschließend der Aufbereitungseinheit zugeführt. Die Zufuhr erfolgt hierbei zweckmäßigerweise über eine Kondensatrückführleitung als Teil eines Kondensatkreislaufs. In die Kondensatrückführleitung sind vorzugsweise sowohl die zur photolytischen Zersetzung genutzte Strahlungsquelle als auch die zur Abtrennung der Zersetzungsprodukte eingesetzte Aufbereitungseinheit geschaltet. Die Aufbereitung kann mittels unterschiedlicher Verfahren, wie beispielsweise mittels Adsorptionsverfahren, Absorptionsverfahren oder auch durch den Einsatz eines Ionentauschers erfolgen.

Besonders bevorzugt erfolgt die Abtrennung der Zersetzungsprodukte aus dem Kondensat mittels einer Umkehrosmose. Eine Umkehrosmose ist ein Filtrationsverfahren, welches eine Ausfilterung von ionischen Verunreinigungen im Molekularbereich ermöglicht. Hierbei wird die verunreinigte Flüssigkeit, vorliegend das Kondensat, gegen ein Filtermedium, eine semipermeable Membran gepresst. Die Verunreinigungen bleiben als Retentat vor der Membran zurück, das Kondensat hingegen dringt durch die Membran hindurch. Das die Membran durchdringende Kondensat wird als Permeat bezeichnet. Durch eine solche Trennung in der Aufbereitungseinheit entsteht ein kleiner aufkonzentrierter Strom an aus dem Kondensat abgetrennten Zersetzungsprodukten, also Aminen und Nitriten, welche vorzugsweise einer Verwertungseinrichtung zugeführt werden. Das bei der Aufbereitung gereinigte Kondensat, das Permeat, wird von der Aufbereitungseinheit zweckmäßigerweise über die Kondensatrückführleitung in den Desorber zurückgeführt.

In einer besonders vorteilhaften Ausgestaltung wird aus dem Desorber abgeführtes Waschmediums einem Druckbehälter zugeführt. Der Druckbehälter bzw. der sogenannte Flashgaskompressor ist insbesondere für ein sogenanntes Lean-Solvent-Flash-Verfahren ausgebildet und kann zur Verbesserung der Energiebilanz des Abscheideprozesses genutzt werden. Im Lean-Solvent-Flash-Verfahren wird das aus einem Desorber austretende Waschmedium durch eine Druckabsenkung innerhalb des Druckbehälters entspannt, wobei ein Teil des Waschmediums verdampft. So entstehen eine Gasphase und eine Flüssigphase. Die Gasphase besteht aufgrund des vernachlässigbar geringen Dampfdrucks der Aktivkomponente des Waschmediums im Wesentlichen aus Kohlendioxid, Wasserdampf und flüchtigen Degradationsprodukten, wohingegen die Flüssigphase im Wesentlichen das Waschmedium und Wasser enthält.

Zweckmäßigerweise wird ein erster Teilstrom des Waschmediums aus dem Druckbehälter dem Desorber zugeführt. Dieser erste Teilstrom ist ein Dampfstrom, also die vorbeschriebene Gasphase, durch dessen anschließende Kondensation innerhalb des Desorbers zur Desorption von Kohlendioxid aus dem Waschmedium benötigte Wärme gewonnen werden kann. Zusätzlich wird hierbei auch eventuell noch im Waschmedium verbliebenes Kohlendioxid gemeinsam als Teil des ersten Teilstroms in den Desorber zurückgeführt.

Da die heißeste Stelle und damit die Stelle mit dem höchsten Nitrosamindampfdruck der Austrittsstrom aus dem am Sumpf des Desorbers befindlichen Druckbehälter ist, ist es insbesondere von Vorteil, wenn im ersten Teilstrom des Waschmediums enthaltene Degradationsprodukte, insbesondere Nitrosamine, photolytisch in Zersetzungsprodukte zersetzt werden. Aufgrund des geringen Dampfdrucks der Aktivkomponente des Waschmediums verbleibt dieses in der Flüssigphase und stellt keine Beeinträchtigung bei der Bestrahlung des ersten gasförmigen Teilstroms dar.

Zweckmäßigerweise wird ein zweiter Teilstrom des Waschmediums aus dem Druckbehälter zum Absorber geführt. Durch die vorhergegangene Abtrennung der Gasphase innerhalb des Druckbehälters, also des ersten Teilstroms des Waschmediums, ist das Waschmedium nach dem Passieren des Druckbehälters nahezu vollständig von absorbiertem Kohlendioxid befreit.

Die bei dieser Ausgestaltung über das Kondensat ausgetragenen Nitrosamine können dann wie bereits vorbeschrieben photolytisch zersetzt und aus dem Abscheideprozess entfernt werden. Hierzu wird insbesondere ein Teilstrom des Kondensats abgezogen und die im abgezogenen Teilstrom enthaltenen Degradationsprodukte photolytisch in Zersetzungsprodukte zersetzt.

Grundsätzlich ist bei dem vorbeschriebenen Verfahren eine Kombination der angegebenen Verfahrensschritte zur Zersetzung der Degradationsprodukte möglich, so dass optional an verschiedenen Stellen am Desorber eine Zersetzung von Degradationsprodukten und deren gezielte Ausschleusung aus dem Prozess möglich sind.

Zweckmäßig ist es, wenn aus dem Desorber abfließendes Waschmedium einem Reboiler zugeführt wird. Hierbei wird zumindest ein Teilstrom des aus dem Desorber entnommenen Waschmediums dem Reboiler zugeführt und durch Dampf, welcher im Reboiler erzeugt wird, regeneriert.

Die zweite Aufgabe der Erfindung wird erfindungsgemäß gelöst durch eine Abscheidevorrichtung für Kohlendioxid aus einem Gasstrom, insbesondere aus einem Rauchgasstrom, umfassend einen Absorber zur Abtrennung von Kohlendioxid aus dem Gasstrom mittels eines Waschmediums, einen strömungstechnisch mit dem Absorber gekoppelten Desorber zum Freisetzen von im Waschmedium absorbiertem Kohlendioxid, eine dem Desorber strömungstechnisch angeschlossene Kühleinheit zur Bildung eines Kondensats aus einem dem Desorber entnehmbaren Dampfstrom,einen Absorber zur Abtrennung von Kohlendioxid aus dem Gasstrom mittels einer Aminosäuresalzlösung als Waschmedium, einen strömungstechnisch mit dem Absorber gekoppelten Desorber zum Freisetzen von im Waschmedium absorbiertem Kohlendioxid, eine dem Desorber strömungstechnisch angeschlossene Kühleinheit zur Bildung eines Kondensats aus einem dem Desorber entnehmbaren Dampfstrom, eine zwischen der Kühleinheit und dem Desorber angeordnete Abzweigstelle für wenigstens einen Teilstrom des Kondensats, sowie eine Strahlungsquelle zur photolytischen Zersetzung von im Kondensat enthaltenen Degradationsprodukten, insbesondere Nitrosaminen, wobei die Strahlungsquelle der Abzweigstelle strömungstechnisch vorgeschaltet und/oder nachgeschaltet ist. Die Erfindung kennzeichnet sich dadurch, dass der Absorber über eine Abführleitung strömungstechnisch mit einer ersten Desorberstufe des Desorbers verbunden ist, wobei an der Abführleitung des Absorbers eine Abzweigleitung und eine Zuführleitung angeschlossen sind, wobei die Abzweigleitung an einer ersten Desorberstufe und die Zuführleitung an einer zweiten Desorberstufe mit dem Desorber verbunden sind, und die Abzweigleitung temporär drosselbar oder vollständig abschaltbar ist, und in der Zuführleitung ein Wärmetauscher zur Vorwärmung angeordnet ist.

Mittels einer solchen Abscheidevorrichtung können im Waschmedium enthaltene Degradationsprodukte gezielt zersetzt und anschließend aus dem Prozess entfernt werden. Durch die Rückführung eines Teilstroms an Kondensat in den Desorber - als alleiniger Teilstrom oder gemeinsam mit zusätzlichem Frischwasser - kann auf diese Weise eine unerwünschte Aufkonzentrierung von Degradationsprodukten im Waschmedium verhindert und gleichzeitig deren Emission in die Atmosphäre zumindest deutlich verringert werden. Hierzu bedarf es lediglich geringer bauliche Ergänzungen und/oder Veränderungen am Desorber, die mit geringem wirtschaftlichem Aufwand und vertretbaren Kosten umsetzbar sind. Eine kostenintensive und aufwändige Modifikation des Absorbers ist nicht notwendig.

Um das mit Kohlendioxid beladene Waschmedium vom Absorber dem Desorber zuzuführen, ist der Absorber zweckmäßigerweise über eine Abführleitung strömungstechnisch mit einer Zuführleitung des Desorbers verbunden. Im Desorber wird das im Waschmedium absorbierte Kohlendioxid aus dem Waschmedium freigesetzt. Um das regenerierte Waschmedium im weiteren Prozess zur erneuten Absorption von im Rauchgas enthaltenem Kohlendioxid nutzen zu können, ist der Desorber vorzugsweise über eine Abführleitung strömungstechnisch mit einer Zuführleitung des Absorbers verbunden. Das in dem Desorber regenerierte Waschmedium kann über diese strömungstechnische Verbindung in den Absorber zurückgeführt werden.

Da Aminosäuresalze - als Aktivkomponente des Waschmediums - einen vernachlässigbar geringen Dampfdruck haben, der einen unerwünschten Austrag in die Atmosphäre verhindert, ist als Waschmedium bevorzugt eine Aminosäuresalzlösung, insbesondere eine wässrige Aminosäuresalzlösung, eingesetzt.

Dem Desorber ist an seinem Kopf zweckmäßigerweise eine Dampfleitung angeschlossen, über welche der entnommene Dampf der Kühleinheit zuführbar ist. Die Kühleinheit, in der aus dem Dampf das entsprechende Kondensat gebildet wird, kann beispielsweise mit einem Wärmetauscher ausgebildet sein. Alternativ kann die Kühleinheit mit einem Direkt-Kontakt-Kühler ausgebildet sein, der entweder alleine oder zusätzlich zu einem Wärmetauscher eingesetzt ist.

Die Kühleinheit ist vorzugsweise in einen Kondensatkreislauf geschaltet, der eine der Kühleinheit angeschlossenen Kondensatleitung umfasst, über die das gebildete Kondensat aus der Kühleinheit abgeführt wird. Der Kondensatleitung ist vorzugsweise eine Kondensatrückführleitung zur Rückführung des Kondensats in den Desorber angeschlossen. Weiterhin ist es vorteilhaft, wenn dem Kondensatkreislauf eine Kondensatabführleitung angeschlossen ist, über die ein Kondensatteilstrom aus dem Kondensatkreislauf abgezogen werden kann.

Die zwischen der Kühleinheit und dem Desorber angeordnete Abzweigstelle bezeichnet die Stelle, an der zumindest ein Teilstrom des Kondensats entnommen wird.

Der Absorber ist über eine Abführleitung strömungstechnisch mit einer ersten Desorberstufe des Desorbers verbunden. Ein erster Teilstrom des aus dem Absorber abgeführten Waschmediums wird über diese strömungstechnische Verbindung ohne Vorwärmung dem Desorber zugeführt.

Um eine Verringerung der zur Desorption zusätzlich in den Prozess einzubringenden thermischen Energie zu erreichen, ist der Abführleitung des Absorbers zweckmäßigerweise eine Abzweigleitung angeschlossen, die strömungstechnisch mit einer zweiten Desorberstufe des Desorbers verbunden ist. Über diese strömungstechnische Verbindung wird ein zweiter vorgewärmter Teilstrom des aus dem Absorber abgeführten Waschmediums dem Desorber zugeführt.

Der entnommene Teilstrom kann hierbei bereits von durch photolytische Zersetzung gebildeten Zersetzungsprodukten, insbesondere Nitrite und Amine, gereinigt worden sein. Mit anderen Worten erfolgen die Zersetzung der Degradationsprodukte und die Entfernung aus dem Kondensat bereits vor der Entnahme des Teilstroms des Kondensats an der Abzweigstelle. Dies ist insbesondere bei einer der Abzweigstelle vorgeschalteten Strahlungsquelle der Fall.

Alternativ erfolgt bei einer der Abzweigstelle nachgeschalteten Strahlungsquelle die Zersetzung der Degradationsprodukte und deren Entfernung aus dem Abscheideprozess erst nach der Entnahme des Teilstroms an der Abzweigstelle.

Die zur photolytischen Zersetzung der Degradationsprodukte eingesetzte Strahlungsquelle ist vorzugsweise eine UV- Strahlungsquelle, die die im Kondensat enthaltenen Nitrosamine zersetzt. Die Strahlungsquelle ist zweckmäßigerweise so angeordnet, dass sie einen abgezogenen Teilstrom des Kondensats oder den Gesamtkondensatstrom vollständig bestrahlt. Die Strahlungsquelle kann hierzu direkt an der Kondensatabführleitung angeordnet sein. Insbesondere ist auch der Einsatz mehrerer UV- Strahlungsquellen möglich, die beispielsweise in Strömungsrichtung des entnommenen Kondensatstroms entlang der Kondensatabführleitung und/oder entlang der Kondensatrückführleitung angeordnet sein können.

In einer vorteilhaften Ausgestaltung ist die der Abzweigstelle nachgeschaltete Strahlungsquelle in eine Kondensatabführleitung geschaltet. Über die Kondensatabführleitung, die der Abzweigstelle angeschlossen ist, wird zweckmäßigerweise ein Teilstrom des Kondensats aus einem dem Desorber angeschlossenen Kondensatkreislauf abgezogen.

Zweckmäßigerweise ist die Kondensatabführleitung strömungstechnisch mit einer Abzugsleitung zur Entnahme von durch die photolytische Zersetzung der Degradationsprodukte im Kondensat gebildeten Zersetzungsprodukte, insbesondere Nitrite und Amine, verbunden, die in einer Verwertungseinrichtung, insbesondere einer Kläranlage, mündet. Über die Abzugsleitung wird neben den Zersetzungsprodukten zweckmäßigerweise auch das Kondensat aus dem Prozess entfernt und kann gemeinsam mit den Zersetzungsprodukten abgezogen und einer Verwertungseinrichtung zugeführt werden.

Ebenfalls ist es von Vorteil, wenn die Abzugsleitung mit einem Vorratstank verbunden ist, in dem der Teilstrom aus Kondensat und Zersetzungsprodukten vor der Zufuhr zu einer Verwertungseinrichtung gesammelt wird.

Die UV-Strahlungsquelle ist vorzugsweise so angeordnet, dass sie den gesamten an der Abzweigstelle abgezogenen Kondensatteilstrom bestrahlt. Sie kann hierzu direkt an der Kondensatabführleitung angeordnet sein. Insbesondere ist auch der Einsatz mehrerer UV-Strahlungsquellen möglich, die beispielsweise in Strömungsrichtung des entnommenen Kondensats entlang der Kondensatabführleitung angeordnet sein können.
Um den Wasserhaushalt des Prozesses konstant zu halten, ist dem Kühlmittelkreislauf, und insbesondere einer Kondensatrückführleitung des Kühlmittelkreislaufs zweckmäßigerweise eine Frischwasserleitung strömungstechnisch angeschlossen.

Weiter von Vorteil ist es, wenn die UV-Strahlungsquelle in eine der Kühleinheit angeschlossene Kondensatrückführleitung geschaltet ist. Die Kondensatrückführleitung ist Teil des Kondensatkreislaufs und der Kondensatleitung der Kühleinheit angeschlossen. Bei einer Schaltung der UV-Strahlungsquelle in die Kondensatrückführleitung wird aus der Kühleinheit austretendes Kondensat dort photolytisch zersetzt.

Zur Abtrennung der im Kondensat gebildeten Zersetzungsprodukte ist der Strahlungsquelle weiter bevorzugt eine Aufbereitungseinheit strömungstechnisch nachgeschaltet. Die Aufbereitungseinheit ist insbesondere ebenfalls in die Kondensatrückführleitung geschaltet. In der Aufbereitungseinheit, die vorzugsweise eine Umkehrosmoseanlage umfasst, werden die Zersetzungsprodukte vom Kondensat abgetrennt. Über eine vorteilhafterweise mit der Aufbereitungseinheit angeschlossene Abzugsleitung können die abgetrennten Zersetzungsprodukte schließlich aus dem Prozess entfernt und einer Verwertungseinrichtung zugeführt werden. Bei einer der Strahlungsquelle strömungstechnisch nachgeschalteten Aufbereitungseinheit ist die Abzweigstelle zur Entnahme der aus Kondensat abgetrennten Zersetzungsprodukte vorzugsweise in der Aufbereitungseinheit ausgebildet.

Das in der Aufbereitungseinheit gereinigte Kondensat wird über eine Verbindung der Kondensatrückführleitung mit einem Einlass des Desorbers wieder in den Desorber zurückgeführt. Durch die Zufuhr des gereinigten Kondensats wird die Konzentration der Nitrosamine innerhalb des Desorbers abgesenkt.

Vorzugsweise ist der Desorber, bzw. ein Auslass des Desorbers über eine Abführleitung mit einem Druckbehälter verbunden. Das Waschmedium wird vom Desorber dem Druckbehälter zugeführt, der als ein Flashgaskompressor zur Durchführung eines Lean-Solvent-Flash-Verfahrens ausgebildet ist. In dem Druckbehälter bilden sich durch dort vorherrschenden Unterdruck eine Gasphase und eine Flüssigphase. Die Gasphase wird dann in den Desorber zurückgeführt. Hierzu ist der Druckbehälter zweckmäßigerweise über eine Abführleitung strömungstechnisch mit dem Desorber verbunden.

In einer bevorzugten Ausführung ist an der Abführleitung des Druckbehälters eine UV-Strahlungsquelle angeordnet. Durch diese UV-Strahlungsquelle werden in dem dem Desorber zugeführten Gas enthaltene Nitrosamine ebenfalls photolytisch zersetzt.

Zweckmäßigerweise ist der Druckbehälter über eine weitere Abführleitung strömungstechnisch mit dem Absorber verbunden. Die Flüssigphase, also das gereinigte Waschmedium, kann so aus dem Druckbehälter in den Absorber zurückgeführt werden.

Zweckmäßigerweise ist dem Desorber ein Reboiler angeschlossen. Der Reboiler liefert als ein sogenannter Sumpfverdampfer die notwendige Regenerationswärme für die Trennung von absorbiertem Kohlendioxid vom Waschmedium. Das beladene Waschmedium wird hierbei durch Dampf, welcher im Reboiler erzeugt wird, regeneriert. Zur Erzeugung des Dampfes innerhalb des Reboilers wird dieser üblicherweise mit importiertem Dampf, beispielsweise aus einem angeschlossenen Dampfkraftwerk, beheizt.

Die für das Verfahren und dessen vorteilhafte Weiterbildungen genannten Vorteile können sinngemäß auf die Abscheidevorrichtung und deren Weiterbildungen übertragen werden.

Im Folgenden wird ein Ausführungsbeispiel der Erfindung und alternative Lösungen anhand einer Zeichnung näher erläutert. Dabei zeigen:
- FIG 1: eine alternative Lösung einer Abscheidevorrichtung für Kohlendioxid aus einem Rauchgasstrom mit einer einer Abzweigstelle nachgeschalteten UV-Strahlungsquelle zur Zersetzung von in einem Kondensatteilstrom enthaltenen Nitrosaminen,
- FIG 2: eine alternative Lösung einer Abscheidevorrichtung für Kohlendioxid aus einem Rauchgasstrom mit einer einer Abzweigstelle vorgeschalteten UV-Strahlungsquelle zur Zersetzung von Kondensatgesamtstrom enthaltenen Nitrosaminen, sowie
- FIG 3: ein Ausführungsbeispiel der erfindungsgemäßen Abscheidevorrichtung für Kohlendioxid aus einem Rauchgasstrom mit einer einer Abzweigstelle nachgeschalteten UV-Strahlungsquelle zur Zersetzung von in einem Kondensatteilstrom enthaltenen Nitrosaminen.

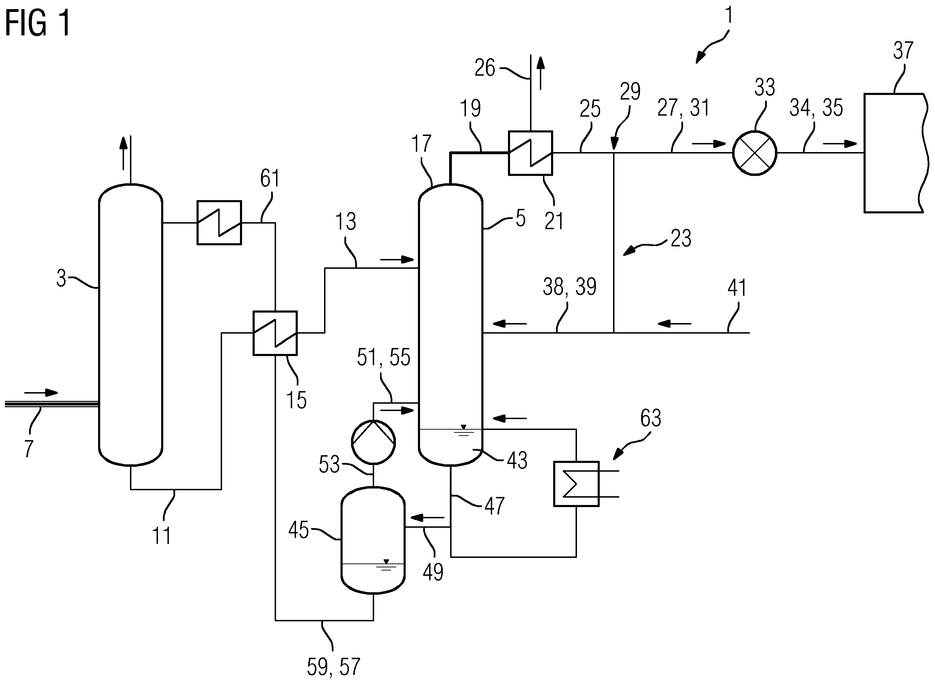

FIG 1 zeigt eine alternative Lösung einer Abscheidevorrichtung 1 für Kohlendioxid aus einem Rauchgas mittels eines Waschmediums, welche nicht unter die Ansprüche fällt. Das Rauchgas entsteht bei der Verbrennung eines fossilen Brennstoffs. Als Waschmedium ist eine wässrige kaliumhaltige Aminosäuresalzlösung eingesetzt.

Die zur Abscheidung eingesetzte Vorrichtung 1 umfasst einen Absorber 3 zur Absorption von Kohlendioxid aus dem Rauchgas, sowie einen strömungstechnisch mit dem Absorber 3 verbundenen Desorber 5 zur Freisetzung des im Waschmedium absorbierten Kohlendioxids.

Zur Abscheidung des Kohlendioxids aus dem Rauchgas wird dieses über eine Rauchgasleitung 7 dem Absorber 3 zugeführt. Bei Eintritt in den Absorber 3 kommt das Rauchgas mit dem Waschmedium in Kontakt und das Kohlendioxid wird in dem Waschmedium absorbiert.

Das mit Kohlendioxid beladene Waschmedium verlässt den Absorber 3 über eine Abführleitung 11, die mit einer Zuführleitung 13 des Desorbers 5 verbunden ist. Bei der Zufuhr zum Desorber 5 passiert das beladene Waschmedium einen Wärmetauscher 15, in dem es entsprechend vorgewärmt wird.

Innerhalb des Desorbers 5 wird das im Waschmedium absorbierte Kohlendioxid freigesetzt und am Kopf 17 des Desorbers 5 gemeinsam mit Wasser und Degradationsprodukten über eine Dampfleitung 19 abgezogen. Der Dampfstrom wird in einer Kühleinheit 21 abgekühlt, wobei sich ein Kondensat bildet. Die Kühleinheit 21 ist in einen Kondensatkreislauf 23 geschaltet, der eine der Kühleinheit 21 angeschlossenen Kondensatleitung 25 umfasst, über die das gebildete Kondensat aus der Kühleinheit 21 abgeführt wird. Das Kohlendioxid wird über eine der Kühleinheit 21 angeschlossene Ableitung 26 aus dieser abgeführt und kann einer nicht gezeigten Verwertung und/oder Lagerung zugeführt werden.

Ein Teilstrom 27 des Kondensats wird vorliegend an einer Abzweigstelle 29 über eine der Kondensatleitung 25 angeschlossene Kondensatabführleitung 31 aus dem Kondensatkreislauf 23 entnommen. Der Abzweigstelle 29 ist eine als UV-Lampe ausgebildete Strahlungsquelle 33 nachgeschaltet, mittels der die im an der Abzweigstelle 29 entnommenen Teilstrom 27 enthaltenen Nitrosamine photolytisch zersetzt werden. Die bei der Zersetzung entstehenden Nitrite und Amine werden als gemeinsamer Teilstrom 34 zusammen mit dem Kondensat über eine Abzugsleitung 35 abgezogen und einer als Kläranlage ausgebildeten Verwertungseinrichtung 37 zugeführt.

Der Teilstrom 38 des Kondensats, vorliegend der Hauptstrom, wird in den Desorber 5 zurückgeführt. Hierzu ist die Kühleinheit 31 über eine Kondensatrückführleitung 39, die Teil des Kondensatkreislaufs 23 ist, strömungstechnisch mit dem Desorber 5 verbunden. Um den durch den Abzug des Teilstroms 34 entstehenden Wasserverlust auszugleichen, wird eine entsprechende Frischwassermenge zugeführt. Hierzu ist der Kondensatrückführleitung 39 eine Frischwasserleitung 41 strömungstechnisch angeschlossen.

Nach der Desorption des Kohlendioxids aus dem Waschmedium sammelt sich das Waschmedium im Sumpf am Boden 43 des Desorbers 5. Von hier aus wird das Waschmedium einem zur Durchführung des Lean-Solvent-Flash-Verfahrens ausgebildeten Druckbehälter 45 und einem sogenannten Flashgaskompressor zugeführt, wozu der Desorber 5 über eine Abführleitung 47 mit einer Zuführleitung 49 des Druckbehälters 45 verbunden ist.

Innerhalb des Druckbehälters 45 wird das Waschmedium unter Ausbildung einer Gasphase und einer Flüssigphase entspannt. Das Gas, also ein erster Teilstrom 51 von dampfförmigem Waschmedium, wird über eine strömungstechnische Verbindung einer Abführleitung 53 des Druckbehälters 45 mit einer Zuführleitung 55 des Desorbers 5 diesem zugeführt. Durch eine anschließende Kondensation des dampfförmigen Waschmedium im Desorber 5 kann zur Desorption des Kohlendioxids aus dem Waschmedium benötigte Wärme gewonnen werden.

Die Flüssigphase, also der zweite Teilstrom 57 aus flüssigem Waschmedium, wird in den Absorber 3 zurückgeführt. Hierzu ist eine Abführleitung 59 des Druckbehälters 45 mit einer Zuführleitung 61 des Absorbers 3 verbunden. Bei der Rückführung passiert das regenerierte Waschmedium den Wärmetauscher 15 und gibt dabei Wärme an das beladene Waschmedium ab, welches von dem Absorber 3 dem Desorber 5 zugeführt wird. Das regenerierte Waschmedium kann in dem Absorber 3 erneut zur Absorption von Kohlendioxid aus einem Rauchgas genutzt werden.

Zusätzlich ist dem Desorber 5 ein Reboiler 63 angeschlossen, der als Sumpfverdampfer einen Teil der Regenerationswärme für die Freisetzung des im Waschmedium absorbierten Kohlendioxids liefert.

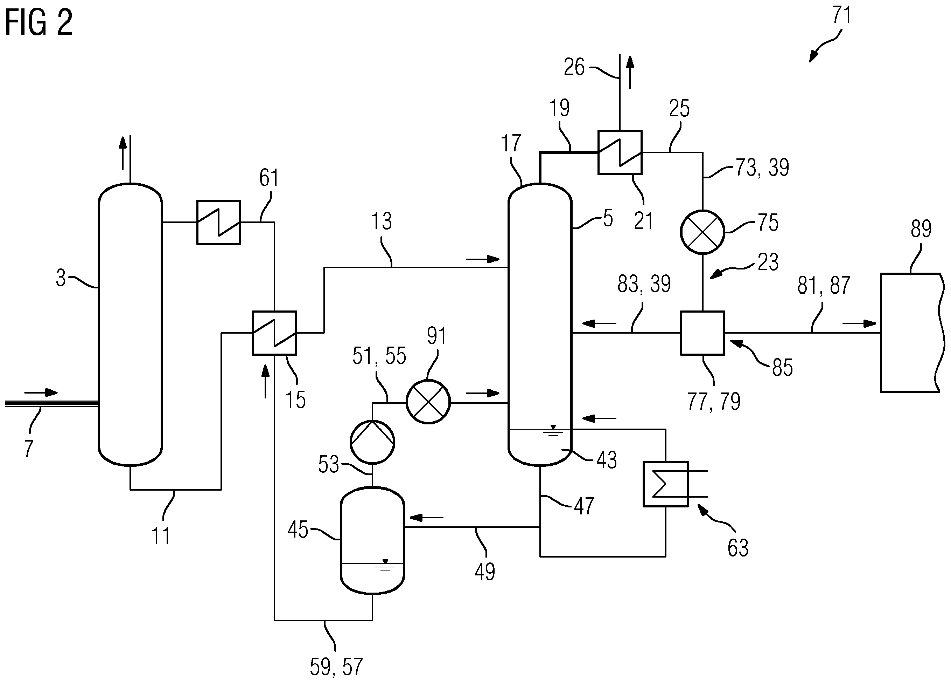

In FIG 2 ist eine weitere alternative Lösung einer Abscheidevorrichtung 71 zur Abscheidung von Kohlendioxid aus einem Rauchgasstrom gezeigt, die ebenfalls nicht unter die Ansprüche fällt. Dabei werden zu FIG 1 gleiche Anlagenkomponenten mit gleichen Bezugszeichen versehen.

Wie auch in FIG 1 wird das beladene Rauchgas im Absorber 3 mit dem Waschmedium in Kontakt gebracht und das Kohlendioxid im Waschmedium absorbiert. Nach der Zufuhr des beladenen Waschmediums zum Desorber 5 wird das Kohlendioxid im Desorber 5 durch thermische Desorption freigesetzt. Das Kohlendioxid wird am Kopf 17 des Desorbers 5 gemeinsam mit Wasser und Degradationsprodukten über die Dampfleitung 19 abgezogen und in der Kühleinheit 21 unter Bildung eines Kondensats abgekühlt.

Im Unterschied zu FIG 1 wird vorliegend der gesamte Kondensatstrom 73 über die Kondensatrückführleitung 39 des Kondensatkreislaufs 23 geführt. Eine Kondensatabführleitung ist von der Abscheidevorrichtung 71 nicht umfasst.

In die Kondensatrückführleitung 39 ist eine UV- Strahlungsquelle 75 geschaltet, die den Gesamtstrom 73 des Kondensats mit UV-Strahlung beaufschlagt und so in diesem enthaltene Nitrosamine photolytisch in Nitrite und Amine zersetzt. Der UV-Strahlungsquelle 75 ist eine Aufbereitungseinheit 77 strömungstechnisch nachgeschaltet, die zur Abtrennung der Zersetzungsprodukte aus dem Kondensat dient. Die Aufbereitungseinheit 77 umfasst hierzu eine Umkehrosmoseanlage 79, mittels derer die entstandenen Nitrite und Amine unter Zuhilfenahme einer sempermeablen Membran als Retentat 81 von dem Kondensat, der Permeat 83, abtrennt.

Das Retentat 81, also die unter anderem aus dem Wasser abgetrennten Amine und Nitrite, werden innerhalb der Aufbereitungseinheit 77 vom Kondensat abgetrennt. Die Abzweigstelle 85 für das Kondensat ist somit vorliegend in der Aufbereitungseinheit 77 als ein Teilstrom ausgebildet und der UV-Strahlungsquelle 75 nachgeschaltet. Die in der Aufbereitungseinheit 77 abgetrennten Zersetzungsprodukte, das Retentat 81 werden über eine dieser angeschlossenen Abzugsleitung 87 einer Verwertungseinrichtung 89 zugeführt. Das Kondensat bzw. Permeat 83 selbst wird über die Kondensatrückführleitung 39 wieder dem Desorber 5 zugeführt.

Das sich am Boden 43 des Desorbers 5 sammelnde Waschmedium wird über die strömungstechnische Verbindung der Abführleitung 47 des Desorbers 5 mit der Zuführleitung 49 des Druckbehälters 45 diesem zugeführt. Der innerhalb des Druckbehälters entstehende gasförmige erste Teilstrom 51 des Waschmediums über die strömungstechnische Verbindung der Abführleitung 53 des Druckbehälters 45 mit der Zuführleitung 55 des Desorbers 5 diesem zugeführt.

In der Zuführleitung 55 zum Desorber ist eine weitere UV-Strahlungsquelle 91 angeordnet, mittels derer in der Gasphase enthaltenen Degradationsprodukte und insbesondere enthaltene Nitrosamine zerstört werden. Durch den nahezu nicht vorhandenen Dampfdruck des eingesetzten Waschmediums wird UV-Bestrahlung des Gasstroms an dieser Stelle nicht behindert.

Der zweite Teilstrom 57 aus flüssigem Waschmedium wird über die strömungstechnische Verbindung des der Abführleitung 59 des Druckbehälters 45 mit der Zuführleitung 61 des Absorbers 3 in diesem zurückgeführt.

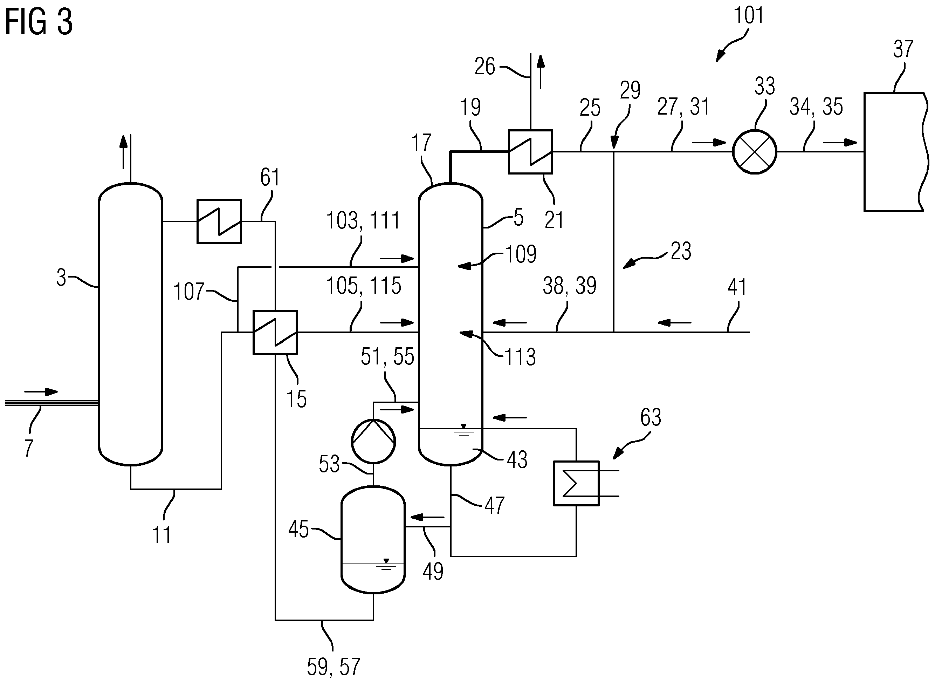

FIG 3 zeigt ein Ausführungsbeispiel der erfindungsgemäßen Abscheidevorrichtung 101 für Kohlendioxid aus einem Rauchgas mittels eines Waschmediums. Auch hier werden zu den FIG 1 und 2 gleiche Anlagenkomponenten mit gleichen Bezugszeichen versehen.

Die zur Abscheidung eingesetzte Vorrichtung 101 umfasst den Absorber 3 zur Absorption von Kohlendioxid aus dem Rauchgas, sowie den strömungstechnisch mit dem Absorber 3 verbundenen Desorber 5 zur Freisetzung des im Waschmedium absorbierten Kohlendioxids. Das zu reinigende Rauchgas wird über die Rauchgasleitung 7 dem Absorber 3 zugeführt. Bei Eintritt in den Absorber 3 kommt das Rauchgas mit dem Waschmedium in Kontakt und das Kohlendioxid wird in diesem absorbiert.

Nach der Absorption des Kohlendioxids innerhalb des Absorbers 3 wird das beladene Waschmedium dem Absorber 3 über die Abführleitung 11 entnommen. Hierbei wird der Gesamtstrom im Rahmen des sogenannten Split-Feed-Verfahrens des Waschmediums in einen ersten Teilstrom 103 und einen zweiten Teilstrom 105 geteilt.

Der erste Teilstrom 103 wird über eine der Abführleitung 11 angeschlossene Abzweigleitung 107 einer ersten Desorberstufe 109 des dem Absorber 3 nachgeschalteten Desorber 5 geführt. Hierzu ist die Abzweigleitung 107 strömungstechnisch mit einer Zuführleitung 111 des Desorbers 5 verbunden. Der erste Teilstrom 103 wird der ersten Desorberstufe 109 ohne eine Vorwärmung am Kopf 17 des Desorbers 5 zugeführt.

Der zweite Teilstrom 105 wird einer zweiten Desorberstufe 113 des Desorbers 5 über eine strömungstechnische Verbindung der Abführleitung 11 mit einer weiteren Zuführleitung 115 des Desorbers 5 zugeführt. Hierbei passiert der zweite Teilstrom 105 zuerst den Wärmetauscher 15 und wird durch das aus dem Desorber 5 zurückgeführte regenerierte Waschmedium vorgewärmt.

Wie in FIG 1 wird vorliegend der dem Desorber 5 an dessen Kopf 17 entnommenen Dampf der Kühleinheit 21 zugeführt und an der Abzweigstelle 29 der Teilstrom 27 des Kondensats entnommen. Der Teilstrom 27 wird erst nach der Entnahme mit UV-Strahlung beaufschlagt, so dass die Abzweigstelle 29 der UV-Strahlungsquelle 33 vorgeschaltet ist. Die durch die photolytische Zersetzung entstehenden Nitrite und Amine werden als gemeinsamer Teilstrom 34 zusammen mit dem Kondensat über eine Abzugsleitung 35 abgezogen und der Verwertungseinrichtung 37 zugeführt.

Über die Kondensatrückführleitung 39 wird der Hauptstrom 38 des Kondensats in den Desorber 5 zurückgeführt, wobei der Wasserhaushalt des Abscheideprozesses durch die der Kondensatrückführleitung 39 angeschlossene Frischwasserleitung 41 konstant gehalten wird.

Um die Entfernung der Degradationsprodukte aus dem Kondensat weiter zu verbessern, ermöglicht die Ausgestaltung der Abscheidevorrichtung 101 einen regeltechnischen Eingriff in das Split-Feed-Verfahren. Durch eine temporäre Abschaltung oder Drosselung des kalten ersten Teilstroms 103 bei grenzwertig hohen Nitrosaminkonzentrationen kann die Temperatur am Desorberkopf 17 auf bis zu 100°C erhöht werden, wodurch sich auch die Nitrosaminkonzentration am Desorberkopf 17 vorübergehend massiv erhöht. Die im Waschmedium enthaltenen Nitrosamine werden so verstärkt ins Kondensat ausgewaschen.

Wenn die Konzentration der Nitrosamine wieder sinkt, kann der kalte erste Teilstrom 103 wieder zugeschaltet werden, wodurch die Temperatur am Desorberkopf 17 entsprechend wieder absinkt. Um dieser temporäre Betriebsweise zu ermöglichen, ist die am Desorberkopf 17 eingesetzte Kühleinheit 21 entsprechend ausgelegt.

Das sich während des Abscheideprozesses am Boden 43 des Desorbers 5 sammelnde Waschmedium wird auch vorliegend dem Druckbehälter 45 zugeführt. Vom Druckbehälter 45 ausgehend wird der erste, gasförmige Teilstrom 51 wieder dem Desorber 5 zugeführt, wohingegen der zweite Teilstrom 57 zur erneuten Nutzung als Waschmedium zur Abscheidung von Kohlendioxid in den Absorber 3 geführt wird.

## Patentansprüche

1. Verfahren zur Abscheidung von Kohlendioxid aus einem Gasstrom, insbesondere aus einem Rauchgasstrom,
- wobei ein Gasstrom in einem Absorber (3) einer Abscheidevorrichtung (1, 71, 101) unter Abscheidung von im Gasstrom enthaltenem Kohlendioxid mit einem Waschmedium in Kontakt gebracht wird,
- wobei als Waschmedium eine Aminosäuresalzlösung eingesetzt wird,
- wobei das beladene Waschmedium zum Freisetzen des Kohlendioxids einem Desorber (5) der Abscheidevorrichtung (1, 71, 101) zugeführt wird,
- wobei dem Desorber (5) ein Dampfstrom entnommen und zur Bildung eines Kondensats einer Kühleinheit (21) zugeführt wird,
- wobei in wenigstens einem Teilstrom (27) des Kondensats enthaltene Degradationsprodukte, insbesondere Nitrosamine, photolytisch in Zersetzungsprodukte zersetzt werden,
- wobei zumindest die Zersetzungsprodukte, insbesondere Nitrite und Amine, abgezogen werden, und
- wobei wenigstens ein Teilstrom (38) des Kondensats in den Desorber (5) zurückgeführt wird
**dadurch gekennzeichnet,**
**dass** ein erster Teilstrom (103) des aus dem Absorber (3) ausströmenden Waschmediums einer ersten Desorberstufe (109) des Desorbers (5) ohne Vorwärmung zugeführt wird und ein zweiter Teilstrom (105) des aus dem Absorber (3) ausströmenden Waschmediums einer zweiten Desorberstufe (113) des Desorbers (5) vorgewärmt zugeführt wird, wobei der erste Teilstrom (103) temporär gedrosselt oder vollständig abgeschaltet wird .

2. Verfahren nach Anspruch 1, wobei die Degradationsprodukte durch UV-Strahlung photolytisch zersetzt werden.

3. Verfahren nach Anspruch 1 oder 2,
wobei die Zersetzungsprodukte gemeinsam mit dem Kondensat abgezogen und einer Verwertungseinrichtung (37, 89) zugeführt werden, wobei insbesondere der abgezogene Teilstrom (27) durch Frischwasser ersetzt wird.

4. Verfahren nach Anspruch 1 oder 2,
wobei die Zersetzungsprodukte in einer Aufbereitungseinheit (77) aus dem Kondensat abgetrennt werden, wobei insbesondere die Zersetzungsprodukte mittels einer Umkehrosmose aus dem Kondensat abgetrennt werden.

5. Verfahren nach Anspruch 4,
wobei die in der Aufbereitungseinheit (77) aus dem Kondensat abgetrennten Zersetzungsprodukte einer Verwertungseinrichtung (37, 89) zugeführt werden.

6. Verfahren nach Anspruch 4 oder 5,
wobei das gereinigte Kondensat von der Aufbereitungseinheit (77) in den Desorber (5) zurückgeführt wird.

7. Verfahren nach einem der Ansprüche 1 bis 6,
wobei aus dem Desorber (5) abgeführtes Waschmedium, einem Druckbehälter (45) zugeführt wird.

8. Verfahren nach Anspruch 7,
wobei ein erster Teilstrom (51) des Waschmediums aus dem Druckbehälter (45) dem Desorber (5) zugeführt wird.

9. Verfahren nach Anspruch 8,
wobei im ersten Teilstrom (51) des Waschmediums enthaltene Degradationsprodukte, insbesondere Nitrosamine, photolytisch in Zersetzungsprodukte zersetzt werden.

10. Verfahren nach Anspruch 8 oder 9,
wobei ein zweiter Teilstrom (57) des Waschmediums aus dem Druckbehälter (45) zum Absorber (3) geführt wird.

11. Verfahren nach einem der Ansprüche 1 bis 10,
wobei Waschmedium aus dem Desorber (5) zumindest teilweise einem Reboiler (63) zugeführt wird.

12. Abscheidevorrichtung (1, 71, 101) für Kohlendioxid aus einem Gasstrom, insbesondere aus einem Rauchgasstrom, umfassend
- einen Absorber (3) zur Abtrennung von Kohlendioxid aus dem Gasstrom mittels einer Aminosäuresalzlösung als Waschmedium,
- einen strömungstechnisch mit dem Absorber (3) gekoppelten Desorber (5) zum Freisetzen von im Waschmedium absorbiertem Kohlendioxid,
- eine dem Desorber (5) strömungstechnisch angeschlossene Kühleinheit (21) zur Bildung eines Kondensats aus einem dem Desorber (5) entnehmbaren Dampfstrom,
- eine zwischen der Kühleinheit (21) und dem Desorber (5) angeordnete Abzweigstelle (29, 85) für wenigstens einen Teilstrom (27) des Kondensats, sowie
- eine Strahlungsquelle (33, 75, 91) zur photolytischen Zersetzung von im Kondensat enthaltenen Degradationsprodukten, insbesondere Nitrosaminen, wobei die Strahlungsquelle (33, 75, 91) der Abzweigstelle (29, 85) strömungstechnisch vorgeschaltet und/oder nachgeschaltet ist,
**dadurch gekennzeichnet,**
**dass** der Absorber (3) über eine Abführleitung (11) strömungstechnisch mit einer ersten Desorberstufe (109) des Desorbers (5) verbunden ist, wobei an der Abführleitung (11) des Absorbers (3) eine Abzweigleitung (107) und eine Zuführleitung (115) angeschlossen sind, wobei die Abzweigleitung (107) an einer ersten Desorberstufe (109) und die Zuführleitung (115) an einer zweiten Desorberstufe (113) mit dem Desorber verbunden sind, und die Abzweigleitung temporär drosselbar oder vollständig abschaltbar ist, und in der Zuführleitung (115) ein Wärmetauscher (15) zur Vorwärmung angeordnet ist.

13. Abscheidevorrichtung (1, 71, 101) nach Anspruch 12, wobei die Strahlungsquelle (33, 75, 91) eine UV- Strahlungsquelle ist.

14. Abscheidevorrichtung (1, 71, 101) nach Anspruch 12 oder 13, wobei die der Abzweigstelle (29, 85) nachgeschaltete Strahlungsquelle (33, 75, 91) in eine Kondensatabführleitung (31) geschaltet ist.

15. Abscheidevorrichtung (1, 71, 101) nach Anspruch 14, wobei die Kondensatabführleitung (31) strömungstechnisch mit einer Abzugsleitung (35, 87) zur Entnahme von durch die photolytische Zersetzung der Degradationsprodukte im Kondensat gebildeten Zersetzungsprodukte, insbesondere Nitrite und Amine, verbunden ist, die in einer Verwertungseinrichtung (37, 89) mündet.

16. Abscheidevorrichtung (1, 71, 101) nach Anspruch 12 oder 13, wobei die der Abzweigstelle (29, 85) vorgeschaltete Strahlungsquelle (33, 75, 91) in eine Kondensatrückführleitung (39) geschaltet ist.

17. Abscheidevorrichtung (1, 71, 101) nach Anspruch 16, wobei der Strahlungsquelle (33, 75, 91) eine Aufbereitungseinheit (77), welche (77) insbesondere eine Umkehrosmoseanlage (79) umfasst, zur Abtrennung der Zersetzungsprodukte aus dem Kondensat strömungstechnisch nachgeschaltet ist.

18. Abscheidevorrichtung (1, 71, 101) nach Anspruch 17, wobei die Abzweigstelle (29, 85) zur Entnahme der aus Kondensat abgetrennten Zersetzungsprodukte in der Aufbereitungseinheit (77) ausgebildet ist.

19. Abscheidevorrichtung (1, 71, 101) nach Anspruch 17 oder 18, wobei der Aufbereitungseinheit (77) eine Abzugsleitung (87) zum Abzug der abgetrennten Zersetzungsprodukte, insbesondere Nitrite und Amine, angeschlossen ist, die in einer Verwertungseinrichtung (37, 89) mündet.

20. Abscheidevorrichtung (1, 71, 101) nach einem der Ansprüche 12 bis 19, wobei der Desorber (5) über eine Abführleitung (47) mit einem Druckbehälter (45) verbunden ist.

21. Abscheidevorrichtung (1, 71, 101) nach Anspruch 20, wobei der Druckbehälter (45) über eine Abführleitung (55) strömungstechnisch mit dem Desorber (5) verbunden ist.

22. Abscheidevorrichtung (1, 71, 101) nach Anspruch 21, wobei an der Abführleitung (55) des Druckbehälters (45) eine UV-Strahlungsquelle angeordnet ist.

23. Abscheidevorrichtung (1, 71, 101) nach Anspruch 21 oder 22, wobei der Druckbehälter (45) über eine weitere Abführleitung (59) strömungstechnisch mit dem Absorber (3) verbunden ist.

24. Abscheidevorrichtung (1, 71, 101) nach einem der Ansprüche 12 bis 23, wobei dem Desorber (5) ein Reboiler (63) angeschlossen ist.

## Claims

1. Method for separating carbon dioxide from a gas stream, in particular from a flue gas stream,
- wherein a gas stream in an absorber (3) of a separation device (1, 71, 101) is brought into contact with a washing medium and the carbon dioxide contained in the gas stream is separated,
- wherein an amino acid salt solution is used as a washing medium,
- wherein the charged washing medium, in order to release the carbon dioxide, is supplied to a desorber (5) of the separation device (1, 71, 101),
- wherein a vapor stream is removed from the desorber (5) and supplied to a cooling unit (21) to form a condensate,
- wherein degradation products, in particular nitrosamines, contained in at least a partial stream (27) of the condensate are photolytically decomposed to decomposition products,
- wherein at least the decomposition products, in particular nitrites and amines, are removed, and
- wherein at least a partial stream (38) of the condensate is returned to the desorber (5),
**characterized in that** a first partial stream (103) of the washing medium flowing out from the absorber (3) is supplied to a first desorber stage (109) of the desorber (5) without preheating and a second partial stream (105) of the washing medium flowing out from the absorber (3) is supplied to a second desorber stage (113) of the desorber (5) in a preheated state, wherein the first partial stream (103) is temporarily throttled or completely shut off.

2. Method according to Claim 1, wherein the decomposition products are photolytically decomposed by UV radiation.

3. Method according to Claim 1 or 2,
wherein the decomposition products are removed together with the condensate and supplied to a recovery facility (37, 89),
wherein in particular the removed partial stream (27) is replaced by fresh water.

4. Method according to Claim 1 or 2,
wherein the decomposition products are separated from the condensate in a processing unit (77)
wherein in particular the decomposition products are separated from the condensate by means of reverse osmosis.

5. Method according to Claim 4,
wherein the decomposition products separated from the condensate in the processing unit (77) are supplied to a recovery facility (37, 89).

6. Method according to Claim 4 or 5,
wherein the purified condensate is returned from the processing unit (77) to the desorber (5).

7. Method according to one of Claims 1 to 6,
wherein washing medium discharged from the desorber (5) is supplied to a pressure vessel (45).

8. Method according to Claim 7,
wherein a first partial stream (51) of the washing medium is supplied from the pressure vessel (45) to the desorber (5).

9. Method according to Claim 8,
wherein degradation products contained in the first partial stream (51) of the washing medium, in particular nitrosamines, are photolytically decomposed to decomposition products.

10. Method according to Claim 8 or 9,
wherein a second partial stream (57) of the washing medium is supplied from the pressure vessel (45) to the absorber (3).

11. Method according to one of Claims 1 to 10, wherein washing medium from the desorber (5) is at least partially supplied to a reboiler (63).

12. Separation device (1, 71, 101) for separating carbon dioxide from a gas stream, in particular from a flue gas stream, comprising
- an absorber (3) for separating carbon dioxide from the gas stream by means of an amino acid salt solution as a washing medium,
- a desorber (5) fluid-dynamically coupled to the absorber (3) for releasing carbon dioxide absorbed in the washing medium,
- a cooling unit (21) fluid-dynamically connected to the desorber (5) to form a condensate from a vapor stream which can be removed from the desorber (5),
- a branch point (29, 85) arranged between the cooling unit (21) and the desorber (5) for at least a partial stream (27) of the condensate, and
- a radiation source (33, 75, 91) for photolytic decomposition of degradation products contained in the condensate, in particular nitrosamines, wherein the radiation source (33, 75, 91) is fluid-dynamically connected upstream and/or downstream from the branch point (29, 85),
**characterized in that** the absorber (3) is fluid-dynamically connected via a discharge line (11) to a first desorber stage (109) of the desorber (5), wherein a branch line (107) and a supply line (115) are connected to the discharge line (11) of the absorber (3), wherein the branch line (107) is connected to the desorber at a first desorber stage (109) and the supply line (115) is connected to the desorber at a second desorber stage (113), and the branch line can be temporarily throttled or completely shut off, and a heat exchanger (15) for preheating is arranged in the supply line (115).

13. Separation device (1, 71, 101) according to Claim 12, wherein the radiation source (33, 75, 91) is a UV radiation source.

14. Separation device (1, 71, 101) according to Claim 12 or 13, wherein the radiation source (33, 75, 91) configured downstream from the branch point (29, 85) is connected to a condensate discharge line (31).

15. Separation device (1, 71, 101) according to Claim 14, wherein the condensate discharge line (31) is fluid-dynamically connected to a removal line (35, 87) for removing decomposition products formed by photolytic decomposition of the degradation products in the condensate, in particular nitrites and amines, said removal line leading to a recovery facility (37, 89).

16. Separation device (1, 71, 101) according to Claim 12 or 13, wherein the radiation source (33, 75, 91) configured upstream from the branch point (29, 85) is connected to a condensate return line (39).

17. Separation device (1, 71, 101) according to Claim 16, wherein a processing unit (77), which (77) comprises in particular a reverse osmosis system (79), for separating the decomposition products from the condensate is fluid-dynamically configured downstream from the radiation source (33, 75, 91).

18. Separation device (1, 71, 101) according to Claim 17, wherein the branch point (29, 85) for removing the decomposition products separated from the condensate is configured in the processing unit (77).

19. Separation device (1, 71, 101) according to Claim 17 or 18, wherein a removal line (87) for removing the separated decomposition products, in particular nitrites and amines, is connected to the processing unit (77), said line leading to a recovery facility (37, 89).

20. Separation device (1, 71, 101) according to one of Claims 12 to 19, wherein the desorber (5) is connected to a pressure vessel (45) via a discharge line (47).

21. Separation device (1, 71, 101) according to Claim 20, wherein the pressure vessel (45) is fluid-dynamically connected to the desorber (5) via a discharge line (55).

22. Separation device (1, 71, 101) according to Claim 21, wherein a UV radiation source is arranged on the discharge line (55) of the pressure vessel (45).

23. Separation device (1, 71, 101) according to Claim 21 or 22, wherein the pressure vessel (45) is fluid-dynamically connected to the absorber (3) via a further discharge line (59) .

24. Separation device (1, 71, 101) according to one of Claims 12 to 23, wherein a reboiler (63) is connected to the desorber (5) .

## Revendications

1. Procédé pour séparer du dioxyde de carbone d'un courant gazeux, notamment d'un courant de gaz de fumée,
- dans lequel on met en contact avec un fluide de lavage un courant gazeux dans un absorbeur (3) d'une installation (1, 71, 101) de séparation, en séparant du dioxyde de carbone contenu dans le courant gazeux,
- dans lequel on utilise, comme fluide de lavage, une solution de sel d'acide aminé,
- dans lequel on envoie le fluide de lavage chargé à un désorbeur (5) de l'installation (1, 71) de séparation pour libérer le dioxyde de carbone,
- dans lequel on prélève du désorbeur (5) un courant de vapeur et on l'envoie à une unité (21) de refroidissement pour former un produit condensé,
- dans lequel on décompose photolytiquement en des produits de décomposition des produits de dégradation, notamment des aminés nitrées, contenus dans au moins un courant (27) partiel du produit condensé,
- dans lequel on retire au moins des produits de décomposition, notamment des nitrites et des aminés, et
- dans lequel on retourne au moins un courant (38) partiel du produit condensé au désorbeur (5),
**caractérisé**
**en ce que** l'on envoie, sans préchauffage, un premier courant (103) partiel du fluide de lavage sortant de l'absorbeur (3) à un premier étage (109) du désorbeur (5) et on envoie, avec préchauffage, un deuxième courant (105) partiel du fluide de lavage sortant de l'absorbeur (3) à un deuxième étage (113) du désorbeur (5), le premier courant (103) partiel étant réduit temporairement ou interrompu complètement.

2. Procédé suivant la revendication 1,
dans lequel on décompose photolytiquement les produits de dégradation par du rayonnement UV.

3. Procédé suivant la revendication 1 ou 2,
dans lequel on retire les produits de décomposition conjointement avec le produit condensé et on les envoie à un dispositif (37, 89) de valorisation, dans lequel, notamment, on remplace le courant (27) partiel retiré par de l'eau fraîche.

4. Procédé suivant la revendication 1 ou 2,
dans lequel on sépare du produit condensé les produits de décomposition dans une unité (77) de traitement, les produits de décomposition étant séparés du produit condensé notamment au moyen d'une osmose inverse.

5. Procédé suivant la revendication 4,
dans lequel on envoie à un dispositif (37, 89) de valorisation les produits de décomposition séparés du produit condensé dans l'unité (77) de traitement.

6. Procédé suivant la revendication 4 ou 5,
dans lequel on renvoie au désorbeur (5) le produit condensé épuré par l'unité (77) de traitement.

7. Procédé suivant l'une des revendications 1 à 6,
dans lequel on envoie à un récipient (45) sous pression le fluide de lavage évacué du désorbeur (5).

8. Procédé suivant la revendication 7, dans lequel on envoie du récipient (45) sous pression au désorbeur (5) un premier courant (51) partiel du fluide de lavage.

9. Procédé suivant la revendication 8, dans lequel on décompose photolytiquement en des produits de décomposition des produits de dégradation, notamment des aminés nitrées, contenus dans le premier courant (51) partiel du fluide de lavage.

10. Procédé suivant la revendication 8 ou 9,
dans lequel on envoie du récipient (45) sous pression à l'absorbeur (3) un deuxième courant (57) partiel du fluide de lavage.

11. Procédé suivant l'une des revendications 1 à 10,
dans lequel on envoie du fluide de lavage du désorbeur (5), au moins en partie, à un rebouilleur (63).

12. Installation (1, 71, 101) de séparation du dioxyde de carbone d'un courant gazeux, notamment d'un courant de gaz de fumée, comprenant
- un absorbeur (3) pour séparer du dioxyde de carbone du courant gazeux, au moyen d'une solution de sel d'acide aminé, comme fluide de lavage,
- un désorbeur (5), communiquant en technique d'écoulement avec l'absorbeur (3), pour libérer du dioxyde de carbone absorbé dans le fluide de lavage,
- une unité (21) de refroidissement, communiquant en technique d'écoulement avec le désorbeur (5), pour former un produit condensé à partir d'un courant de vapeur pouvant être prélevé du désorbeur (5),
- un point (29, 85) de dérivation d'au moins un courant (27) partiel du produit condensé, disposé entre l'unité (21) de refroidissement et le désorbeur (5), ainsi que
- une source (33, 75, 91) de rayonnement pour décomposer photolytiquement des produits de dégradation, notamment des aminés nitrées, contenus dans le produit condensé, la source (33, 75, 91) de rayonnement étant disposée en amont et/ou en aval en technique d'écoulement du point (29, 85) de dérivation,
**caractérisée**
**en ce que** l'absorbeur (3) communique en technique d'écoulement par un conduit (11) d'évacuation avec un premier étage (109) du désorbeur (5), un conduit (10) de dérivation et un conduit (115) d'amenée étant raccordés au conduit (11) d'évacuation de l'absorbeur (3), le conduit (107) de dérivation communiquant avec le désorbeur à un premier étage (109) du désorbeur et le conduit (115) d'amenée à un deuxième étage (113) du désorbeur et le conduit de dérivation peut être étranglé temporairement ou obturé complètement et, dans le conduit (115) d'amenée, un échangeur de chaleur (15) est monté pour le préchauffage.

13. Installation (1, 71, 101) de séparation suivant la revendication 12,
dans laquelle la source (33, 75, 91) de rayonnement est une source de rayonnement UV.

14. Installation (1, 71, 101) de séparation suivant la revendication 12 ou 13,
dans laquelle la source (33, 75, 91) de rayonnement, montée en aval du point (29, 85) de dérivation, est montée dans un conduit (31) d'évacuation du produit condensé.

15. Installation (1, 71, 101) de séparation suivant la revendication 14,
dans laquelle le conduit (31) d'évacuation du produit condensé communique en technique d'écoulement avec un conduit (35, 87) de retrait pour prélever des produits de décomposition, notamment des nitrites et des aminés, formés dans le produit condensé par la décomposition photolytique des produits de dégradation, lequel conduit débouche dans un dispositif (37, 89) de valorisation.

16. Installation (1, 71, 101) de séparation suivant la revendication 12 ou 13,
dans laquelle la source (33, 75, 91) de rayonnement, montée en amont du point (29, 85) de dérivation, est montée dans un conduit (29) de retour du produit condensé.

17. Installation (1, 71, 101) de séparation suivant la revendication 16,
dans laquelle, pour la séparation des produits de décomposition du produit condensé, il est monté, en aval en technique d'écoulement de la source (33, 75, 91) de rayonnement, une unité (77) de traitement, qui (77) comprend, notamment, une installation (79) d'osmose inverse.

18. Installation (1, 71, 101) de séparation suivant la revendication 17,
dans laquelle le point (29, 85) de dérivation est constitué pour prélever les produits de décomposition séparés du produit condensé dans l'unité (77) de traitement.

19. Installation (1, 71, 101) de séparation suivant la revendication 17 ou 18,
dans laquelle il est raccordé à l'unité (77) de traitement un conduit (87) de retrait pour le retrait des produits de décomposition séparés, notamment de nitrites et d'aminés, qui débouche dans un dispositif (37, 89) de valorisation.

20. Installation (1, 71, 101) de séparation suivant l'une des revendications 12 à 19,
dans laquelle le désorbeur (5) communique avec un récipient (45) sous pression par un conduit (47) d'évacuation.

21. Installation (1, 71, 101) de séparation suivant la revendication 20,
dans laquelle le réservoir (45) sous pression communique en technique d'écoulement avec le désorbeur (5) par un conduit (55) d'évacuation.

22. Installation (1, 71, 101) de séparation suivant la revendication 21,
dans laquelle une source de rayonnement UV est montée sur le conduit (55) d'évacuation du réservoir (45) sous pression.

23. Installation (1, 71, 101) de séparation suivant la revendication 21 ou 22,
dans laquelle le réservoir (45) sous pression communique en technique d'écoulement avec l'absorbeur (3) par un autre conduit (59) d'évacuation.

24. Installation (1, 71, 101) de séparation suivant l'une des revendications 12 à 23,
dans laquelle un rebouilleur (63) est raccordé au désorbeur (5).
